# EUROPÄISCHE PATENTSCHRIFT

(11) **EP 2 132 608 B1**
(45) Veröffentlichungstag und Bekanntmachung des Hinweises auf die Patenterteilung: **28.01.2015**
(21) Anmeldenummer: 08716141.0
(22) Anmeldetag: 19.02.2008
(51) Int. Cl.: G05B 19/42, B23K 9/025, B23K 31/02, G01B 11/25, G01B 21/04, G06T 7/00

(54) **VERFAHREN UND VORRICHTUNG ZUR STEUERUNG VON ROBOTERN ZUM SCHWEISSEN VON WERKSTÜCKEN**
METHOD AND DEVICE FOR CONTROLLING ROBOTS FOR WELDING WORKPIECES
PROCÉDÉ ET DISPOSITIF DE COMMANDE DE ROBOTS POUR LE SOUDAGE DE PIÈCES

(30) Priorität: 19.02.2007 DE 102007008598
(43) Veröffentlichungstag der Anmeldung: 16.12.2009
(73) Patentinhaber: Fraunhofer-Gesellschaft zur Förderung der angewandten Forschung e.V., 80686 München (DE); Universität Rostock, 18051 Rostock (DE)
(72) Erfinder: WANNER, Martin, Christoph, 18211 Nienhagen (DE); ZYCH, Alexander, 18057 Rostock (DE); PFLETSCHER, Uwe, 18211 Rethwisch (DE)
(74) Vertreter: Pfenning, Meinig & Partner GbR
(86) Internationale Anmeldenummer: PCT/EP2008/001618
(87) Internationale Veröffentlichungsnummer: WO 2008/101737

(56) Entgegenhaltungen:
- EP-A- 1 361 414
- WO-A-2004/071717
- DE-A1- 19 829 661
- US-A- 5 991 437
- US-A- 5 999 642
- T.MACHLEIDT, K.-H.FRANKE,F.GASSMANN,D.KOLLHOFF: "Extraktion und Verarbeitung von 3D-Geometriedaten mittels Bildsensorik für unterschiedliche Messvolumina"[Online] 26. Mai 2003 (2003-05-26), XP002481313 Gefunden im Internet: URL:http://web.archive.org/web/20030526090 331/http://www.zbs-ilmenau.de/pdf/Iwkma97. pdf> [gefunden am 2008-05-23]

## Beschreibung

Die Erfindung betrifft ein Verfahren zur Steuerung von Robotern zum Schweißen von dreidimensionalen Werkstücken.

Im Schiffbau werden Mikropaneele verwendet, die aus Stahlplatten und darauf verschweißten Versteifungsprofilen bestehen. In der Ausgangssituation werden diese Verstärkungsprofile unterschiedlicher Art auf die Stahlplatten geheftet und anschließend mit Knickarmrobotern oder Portalschweißanlagen abgeschweißt. Die Profile zeichnen sich durch unterschiedliche Profilformen, Abmessungen und Endbeschnitte aus, die Anordnung der Profile auf den Platten ist in jeglicher Weise möglich. Die Bewegungsprogrammierung der Schweißroboter zum Bahnschweißen stellt jedoch besonders bei geringen Stückzahlen, wie es bei den Mikropaneelen im Schiffsbau gegeben ist, einen unverhältnismäßig hohen Aufwand am gesamten, ansonsten automatisierten Fertigungsprozess dar.

Zur Zeit basieren fast alle Programmiermethoden für das Schweißen von dreidimensionalen Werkstücken im Schiffsbau auf der Verfügbarkeit und anschließenden Konvertierung der jeweiligen CAD-Daten. Neben der Schnittstellenproblematik und den Kompatibilitätsproblemen verschiedener CAD-Programme und deren Ausgabedateien zum üblicherweise verwendeten CAM-Modul sind diese Programmiermethoden mit einer stark eingeschränkten Reaktionsmöglichkeit auf sich kurzfristig ändernde konstruktive oder technologische Merkmale des zu schweißenden Bauteils verbunden. Ändert sich ein Paneel kurzfristig, indem Profile fehlen, zusätzlich aufgebaut werden oder deren Anordnung verändert wird, so wird dennoch das ursprüngliche, nicht mehr aktuelle Roboterprogramm abgefahren. Ein weiteres Problem bei der bisherigen Arbeitsweise ist die Notwendigkeit der Werkstückausrichtung gemäß dem Roboterprogramm bzw. die Verschiebung und Umorientierung des Programms entsprechend der Bauteillage.

Im Stand der Technik ist ein weiteres Verfahren zur Steuerung und Programmierung von Schweißrobotern bekannt (EP 1 188 510 A2), bei dem mittels einer Kamera ein zweidimensionales Foto der Baulehre mit den darauf verteilten Werkstücken erstellt wird. Aus den Bilddaten erkennt das Programm an Hand von Kontrastunterschieden Profillinien in der Draufsicht. Die Einschränkung dieses Verfahrens besteht darin, dass weder die Profilhöhen, also die Länge senkrechter Nähte, wie auch Freischnitte und unterschiedliche Anfangs- und Endbeschnitte der Profile erkannt werden können. Zur Freigabe des Programms sind zudem relativ umfangreiche interaktive Eingaben des Bedieners erforderlich, welche insbesondere die Anfangs- und Endbedingungen der Schweißnähte beschreibt.

Der nächstliegende Stand der Technik für die Erfindung wird durch die Druckschriften DE 198 29 661 A1 und US 5 999 642 A offenbart. In den dort offenbarten Verfahren werden zunächst Oberflächenmerkmale eines Werkstücks einschließlich seines Werkstückträgers mittels eines dreidimensionalen Bilderfassungssystems erfasst. Anschließend wird das erfasste Bild in eine aus Teilflächen und Kanten bestehendes Oberflächenmodell des Werkstücks einschließlich seines Werkstückträgers umgesetzt. Hiernach wird eine Geometriemodelle enthaltende Aufgabenbeschreibung für die Bearbeitung des Werkstücks eingelesen. Aus der Aufgabenbeschreibung und den erfassten Oberflächenmerkmalen werden Anschließend Bewegungstrajektorien sowie weitere für den Verarbeitungsprozess erforderliche Parameter ermittelt. Anschließend werden die Steuerbefehlssequenzen für den Roboter erzeugt. Außerdem wird ein lokales Werkstückkoordinatensystem festgelegt.

Es ist aus den besagten Druckschriften also ein Verfahren zur Steuerung von Robotern zum Schweißen von dreidimensionalen Werkstücken mit folgenden Schritten:
Positionieren und Heften von Profilen (3) auf eine Platte (2) zur Bildung des zu schweißenden Werkstücks (1),
Abbilden des Werkstücks mittels eines dreidimensionalen Bilderfassungssystems in Form von dreidimensionalen Bildpunkten,
Bestimmen von Geometriedaten,
Bestimmen der Schweißnahtdaten aus den Geometriedaten unter Berücksichtigung der Profilaufsetzlinien und der Berührungslinien von Profilen,
Zuordnen der Schweißnahtdaten zu parametrierbaren Vorgaben für den Schweißplan, zu gespeicherten vordefinierten Bewegungsmustern des Roboters sowie zu Befehlen zur Steuerung und Regelung des Schweißprozesses.

Der Erfindung liegt die Aufgabe zu Grunde, ein Verfahren zur Steuerung von Robotern zum Schweißen von dreidimensionalen Werkstücken zu schaffen, mit dem keine Verfügbarkeit von CAD-Daten des zu schweißenden Werkstücks notwendig ist, das Schweißnähte sowohl in horizontaler als auch vertikaler Richtung automatisch bestimmt und das eine flexible Reaktion auf sich kurzfristig ändernde konstruktive oder technologische Merkmale des zu schweißenden Werkstücks gestattet.

Diese Aufgabe wird erfindungsgemäß durch die Merkmale des Hauptanspruchs gelöst.

Durch die in den Unteransprüchen angegebenen Maßnahmen sind vorteilhafte Weiterbildungen und Verbesserungen möglich.

Dadurch, dass das als eine Platte mit gehefteten Profilen ausgebildete zu schweißende Werkstück mittels eines dreidimensionalen Bilderfassungssystems in Form von dreidimensionalen Bildpunkten abgebildet wird und die Geometriedaten der Platte und der Profile aus den dreidimensionalen Bildpunkten bestimmt werden, aus den Geometriedaten unter Berücksichtigung der Profilaufsetzlinien und der Berührungslinien von Profilen die Schweißnahtdaten bestimmt werden und die Schweißnahtdaten gespeicherten, vordefinierten Bewegungsmustern des Roboters sowie Befehlen zur Steuerung des Schweißprozesses zugeordnet werden, kann als Verfahren zur Steuerung der Roboter ein Programm generiert werden, das unabhängig von den CAD-Daten des Werkstücks ist. Diese Art der zeit- und ortsnahen Programmerstellung umgeht Fehlermöglichkeiten, die durch technische oder technologische Änderungen in der Zeit zwischen Offline-Programmerstellung und Abarbeitung des Schweißauftrags auftreten können.

Bei dem erfindungsgemäßen Verfahren liefert das Bilderfassungssystem direkt die für die weitere Verarbeitung benötigten Punktwolken (dreidimensionalen Bildpunkte) eines Messobjektes. Dies sind Matrizen mit n Zeilen, entsprechend der Anzahl der Messpunkte, und drei Spalten, entsprechend den drei Dimensionen des Raums. Direkt auf der Basis der dreidimensionalen Punktwolke erfolgt eine 3D-Geometriedatenverarbeitung, d.h. eine Segmentierung (Trennung der Punkte des Objektes von der Umgebung, Trennung der Punkte der Grundplatte von Punkten der Profile, Trennung der Punkte der Profile untereinander), eine Merkmalsextraktion (Feststellen von Profilverläufen aus der segmentierten Punktwolke), eine Untersuchung der Teilpunktewolken der einzelnen Profile nach Eigenschaften der Profile, wie Anfangs- und Endbeschnitten, Ausbränden bzw. Hinterschneidungen, Höhe oder dgl. Durch die 3D-Bilderfassung und 3D-Bildverarbeitung ist es möglich, die interaktiven Benutzereingaben zur Generierung der Schweißprogramme bzw. eine Kopplung an Konstruktionsdaten, die bei der 2D Messtechnik erforderlich sind, zu vermeiden. Damit kann ein nach dem erfindungsgemäßen Verfahren arbeitendes System als vollautomatisch angesehen werden.

Die weiteren Vorteile können benannt werden zu: Programmerstellung unmittelbar vor der Abarbeitung; Programmerstellung anhand real vorliegender Bauteilgeometrien; beliebige Bauteilpositionierung und -orientierung; Berücksichtigung aller Raumkoordinaten, wodurch auch gleichzeitig Erreichbarkeiten und Kollisionsfreiheit sichergestellt werden. Das Verfahren ist leicht an bestehende Portalrobotersysteme adaptierbar und aufgrund des erfindungsgemäßen Verfahrens wird eine große Flexibilität in der Fertigung erreicht.

Zur Bilderfassung kann jegliche Sensoranordnung verwendet werden, die in der Lage ist, für jeden erfassten Objektpunkt die Koordinaten im Raum zu übergeben. Je höher die Auflösung der Daten, also die Punktedichte ist, umso besser ist die Detailerkennung. Vorteilhaft ist, das Abbild des Werkstücks mittels eines 3D Laserscanners zu erfassen, der aus mehreren Einzelaufnahmen ein räumliches digitales Modell des zu schweißenden Werkstücks liefert. Auch ist die Erfassung der dreidimensionalen Bildkoordinaten mit mindestens einem Musterprojektor und mindestens einer Kamera mit zugeordneter Auswertung möglich.

Ein Ausführungsbeispiel des erfindungsgemäßen Verfahrens wird in der nachfolgenden Beschreibung unter Bezugnahme auf die beigefügte Zeichnung näher erläutert. Es zeigen
- Fig. 1: eine perspektivische Ansicht eines als Mikropaneel ausgebildeten zu schweißenden Werkstücks,
- Fig. 2: eine Aufsicht auf ein weiteres Werkstück, und
- Fig. 3: eine Anordnung von Passmarken zum Kalibrieren des im Ausführungsbeispiel verwendeten Laserscanners.

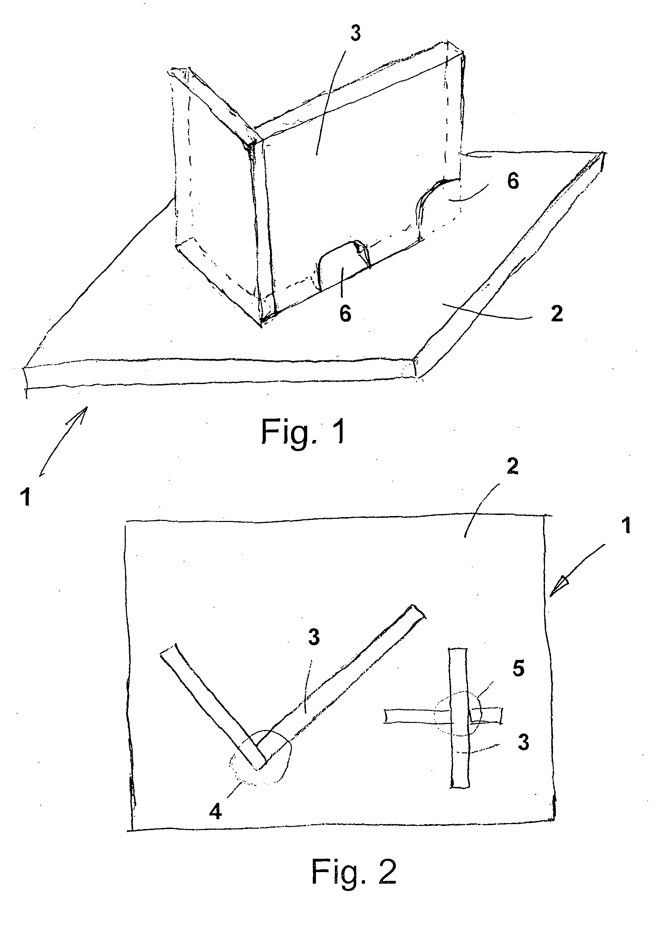

In Fig. 1 und Fig. 2 sind vereinfacht zwei Mikropaneele 1 dargestellt, die üblicherweise aus schiffbautypischen Stahlplatten 2 mit darauf gehefteten Stahlprofilen 3 bestehen, deren Fläche 3 m x 16 m nicht wesentlich übersteigt. Die gezeigten Mikropaneele sind nur schematisch ausgebildet, üblicherweise sind die Stahlplatten 2 mit Ausbränden 6 und Hinterschneidungen versehen und auch die Profile 3 sind in größerer Anzahl vorhanden.

Diese Mikropaneele 1 d.h. die Profile 3 und die Stahlplatte 2 werden mittels eines Roboters, beispielsweise eines Knickarmroboters verschweißt, wobei das Schweißen automatisch gesteuert werden soll. Dazu müssen sowohl die Schweißlinien in der x-y-Ebene, zwischen Profilen 3 und Stahlplatte 2 und in der z-Richtung zwischen den Profilen 3 bestimmt werden.

Das platzierte Mikropaneel 1 wird dann im vorliegenden Ausführungsbeispiel mit einem 3D-Laserscanner abgetastet, wobei je nach Größe des zu erfassenden Arbeitsbereichs ausreichend viele Teilaufnahmen, abhängig vom Aufnahmefeld des Scanners aus unterschiedlichen Einfallswinkeln ausgelöst werden. Anhand der bekannten geometrischen Beziehungen der Positionen und Orientierungen der Einzelbilder untereinander wird aus diesen Einzelaufnahmen ein dreidimensionales Abbild des Arbeitsraums mit dem zu bearbeitenden Paneel 1 erstellt. Somit liegt das Gesamtbild als Bildpunkte in einem dreidimensionalen Koordinatensystem vor.

Aus den Bilddaten der aufgenommenen Szene werden dann die geometrischen Daten der Werkstücke bzw. des Mikropaneels 1 im Arbeitsraum ermittelt. Dazu werden die Umgebungsdaten von den realen Werkstückdaten getrennt, wobei in der Regel alle Messpunkte oberhalb der Ebene der Bauauflage des Arbeitstisches Werkstückpunkte und die Punkte auf oder unterhalb dieser Ebene Umgebungspunkte sind. Im Anschluss wird der Normalenvektor der Platte 2 bestimmt und die Koordinaten mit Hilfe dieses Vektors in ein Werkstückkoordinatensystem transformiert, dessen x-y-Ebene der Plattenebene entspricht und dessen z-Achse mit dem bestimmten Normalenvektor übereinstimmt.

Die Verläufe der Profile 3 auf der Plattenoberfläche sind bestimmend für die Lage der Schweißnähte. Um diese Verläufe zu ermitteln, müssen die Profildaten ausgefiltert werden, die die Profilflächen ergeben, welche die Oberfläche der Platte 2 durchdringen. Diese Durchdringungslinien z.B. diejenigen, in denen sich Profilebenen und Paneelebene durchdringen, entsprechen den Profilverläufen.

Um die Fläche der Profile zu bestimmen, werden die Bildpunkte der Oberfläche der Platte 2 von den Bildpunkten der Oberfläche der Profile 3 getrennt. Da die Profilpunkte alle eindeutig über dem Niveau der Platte 2 liegen werden, kann zum Unterscheiden und Zuordnen der Punkte der Wert der z-Koordinate herangezogen werden. Durch Betrachtung verschiedener Höhenschichten können durch Trennen der Koordinaten oberhalb der Paneelebene die Bildpunkte eindeutig in Profilpunkte und Paneel- bzw. Plattenpunkte aufgeteilt werden.

In den Figuren 1 und 2 ist eine einfache Form eines Paneels 1 dargestellt, allerdings können die Formen sehr vielfältig und kompliziert mit Aussparungen und Hinterschneidungen sein. Damit eine klare Abgrenzung von Großstruktur und Umgebung vorgenommen werden kann, wird die Kontur des Paneels bzw. der Platte 2 bestimmt. Um die Kantenpunkte eindeutig zu identifizieren, werden die vorher vom Rest getrennten Paneelpunkte zusammengefasst, so dass sich die z-Koordinaten nicht mehr voneinander unterscheiden. Die so bestimmte Teilpunktwolke wird dann zeilen- und spaltenweise nach Kantenpunkten durchsucht.

Zur Ermittlung der Aufsetzlinien der Profile 3, die die Strecken sind, auf denen die Profile 3 mit ihren Standflächen auf die Platte 2 geheftet sind, ist es notwendig, innerhalb der entsprechenden Bildpunkte der Profile zusammenhängende Strukturen zu ermitteln, um die Verläufe verschiedener Geraden voneinander trennen zu können. Dazu wird der Abstand zwischen den Punkten berücksichtigt, wobei die Profilpunktwolke ähnlich der Suche nach der Kontur zeilen- und spaltenweise durchsucht wird, um die Strukturen bzw. Strukturfragments zu bestimmen, aus denen dann durch Klassifizierung die Profilverläufe zusammengefasst werden.

Damit eindeutige Aussagen über den genauen Verlauf der späteren Schweißnähte getroffen werden können, müssen die Schnittpunkte 4, 5 (siehe Fig. 2) der Profile 3 untereinander sowie deren Innen- und Außenseiten ermittelt werden, da dadurch die Schnittkanten bestimmt werden, an denen die Steignähte, die die Profile 3 miteinander verbinden, verlaufen. Die Schnittpunkte sind in einseitige 4 und zweiseitige 5 zu unterscheiden. Berühren sich zwei Profilelemente ist der Schnittpunkt einseitig und es bedarf zweier senkrechter Schweißnähte, schneiden zwei Profilelemente einander, ist der Punkt zweiseitig und es sind vier senkrechte Schweißnähte notwendig.

Die Schnittgeraden, die den Profil-Aufsetzlinien bzw. deren Verlängerung bis zum Schneiden der zwei Geraden entsprechen, sind die geometrische Basis für den Verlauf der Schweißnähte, die rechts und links von der interpolierten Geraden der erkannten Profile angeordnet sind. Um diese zu finden wird die Materialstärke des Profils berücksichtigt.

Als Anfangs- und Endpunkte der Schnittgeraden können die Anfangs- und Endpunkte der betroffenen Profile herangezogen werden, wobei wichtig ist, dass die gefundenen Schnittpunkte der Profile als Unterbrechung der Linienführung berücksichtigt werden. An diesen Punkten setzen die senkrechten Nähte zum Verschweißen der Profile untereinander an. Der Start- und Endpunkt der senkrechten Nähte ergibt sich aus dem Niveau der Paneelebene und der Höhe der erkannten Profile.

Nachdem die Koordinaten der Schweißnähte, die waagerechte Nähte sowie Steignähte sind, gefunden wurden, werden diese an die Steuerung des Schweißroboters gegeben. Diese Steuerung weist dem Roboter zugeordnete, parametrierbare Bewegungsmuster, sogenannte Makros, zu, wobei mit Hilfe als Parameter übergebenen Daten die jeweiligen Schweißnähte den hinterlegten Makros zugeordnet werden, d.h. die Makros werden mittels der Parameter, Start- und Endkoordinaten, Profilhöhe und Materialstärke u.a. an die Bedingungen der konkreten Schweißnaht angepasst. Die spezifischen Befehle zur Steuerung des Schweißprozesses, wie Ein- und Ausschalten der Gaszufuhr, Zünden des Lichtbogens, Aktivierung der Nahtverfolgung, Endkraterfüllung und Rückbrennen des Drahtendes sind bereits in den Makros gespeichert.

Für zusätzliche Funktionen, wie z.B. Kollisionskontrollen, werden Höhe und Materialstärke der einzelnen Profile 3 an die Steuerung gegeben und bei dem Schweißen berücksichtigt.

Die Abarbeitungsreihenfolge der Schweißnähte (Schweißplan) wird anhand verschiedener, bereits hinterlegter, anpassbarer Kriterien automatisch vorbestimmt, kann aber mit interaktiver Programmeingabe durch den Anwender geändert werden.

Wie schon oben ausgeführt wurde, ist die erfindungsgemäße Vorrichtung mit einem Bilderfassungssystem versehen, das ein Bilderfassungsmodul umfasst, das die Daten des Bilderfassungssensors empfängt und die Punktewolken der Einzelbilder zu einem Gesamtbild des Arbeitsraums zusammensetzt. Ein Geometrieerkennungsmodul ermittelt, wie oben ausgeführt, die geometrischen Daten der Werkstücke im Arbeitsraum aus den Bilddaten der aufgenommenen Szene und die notwendigen Schweißnahtdaten und eine einen Steuerungsalgorithmus enthaltende Steuereinrichtung führt die Steuerung/Regelung des Schweißprozesses unter Heranziehung der Steuerung des Roboters durch.

Zusätzlich ist ein Kalibriermodul vorgesehen, der den Zusammenhang zwischen den Koordinatensystemen des Roboters, des Bilderfassungssensors und der Baulehre bzw. des Werkstücks durchführt. Es beinhaltet zusätzlich die exakten Positionen und Orientierungen der Einzelbilder für das Zusammenfügen zu einem einheitlichen Bildverband. Für diese Gruppe von Daten ist ein Kalibrieralgorithmus hinterlegt, der eine interaktive Vermessung unterstützt. Weiterhin umfasst es Parameter und Einstellungen zur Optimierung der Geometrieerkennung.

Im Folgenden wird ein Kalibrierverfahren eines dreidimensionalen Bilderfassungssystems beschrieben, das als 3D-Laserscanner ausgebildet ist, wobei es aber auch für andere Arten der Bilderfassung möglich ist. Bei diesem Kalibrierverfahren wird kein Eingriff in den Laserscanner an sich vorgenommen und die Kalibrierung selbst wird bei bzw. nach Installation der Anlage bzw. routinemäßig bei auftretenden Maßungenauigkeiten durchgeführt.

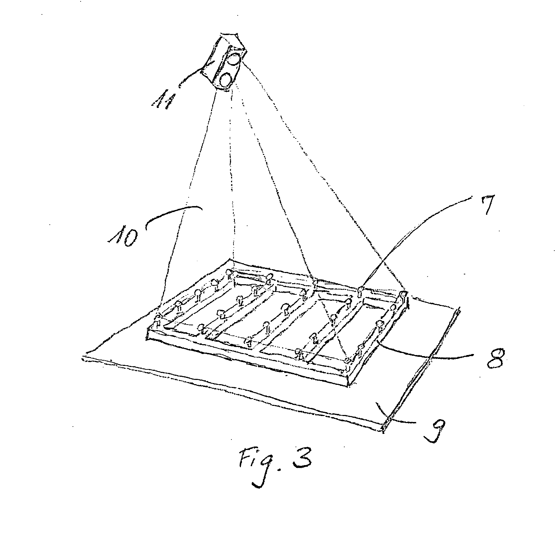

Zur Kalibrierung werden entsprechend Fig. 3 Referenzkugeln 7 auf einem als Halterung dienenden Rahmen 8 in im Ausführungsbeispiel gleichmäßig mit Abständen zueinander angeordnet, der wiederum auf dem Arbeitstisch 9 des zu schweißenden Werkstücks angeordnet ist. Der Bilderfassungsbereich 10 des Laserscanners 11 wird durch den Rahmen 8 bzw. die auf ihm außen liegenden Kugeln 7 vorgegeben. Die Sollwerte der Mittelpunkte der Referenzkugeln 7 sind in einem beliebigen Koordinatensystem, d.h. in einem durch die Anordnung nach Fig. 3 vorgegebenen Koordinatensystem bekannt. Weiterhin ist der Kugeldurchmesser bekannt. Eine zentrale Kugel wird in etwa im Mittelpunkt des Bilderfassungsbereichs angeordnet, d.h. im Mittelpunkt des Koordinatensystems des Scanners. Anschließend werden die Referenzkugeln durch den Scanner aufgenommen und eine Punktwolke der Referenzkugeln im zu kalibrierenden, ebenen Arbeitsbereich erzeugt.

Aus der Punktwolke werden die Istwerte der Kugelmittelpunkte ermittelt, indem diese Punktwolke in einzelne Teilpunktwolken aufgeteilt wird, die jeweils die Oberflächenpunkte der einzelnen Kugeln enthalten (Segmentierung). Anschließend werden die Kugelmittelpunkte aus den Oberflächenpunkten der einzelnen Kugeln mit Hilfe des Verfahrens der kleinsten Fehlerquadrate bestimmt.

Der Scanner 11 weist als Bildsensor eine Matrix aus einer Vielzahl von Pixeln auf, die im Folgenden als Scannermatrix bezeichnet wird. In dieser Matrix werden die zu den ermittelten Kugelmittelpunkten gehörenden Zeilen- und Spaltenindices bestimmt, die mit z_i, s_i bezeichnet werden, wobei i die Nummer der jeweiligen Kugel ist. Dann wird das Koordinatensystem der Sollwerte der Mittelpunkte, bezeichnet als Solldaten zu dem Koordinatensystem der Istwerte, d.h., der Kugelmittelpunkte, die aus der mit dem Scanner aufgenommenen Punktewolke gewonnen wurden, genannt Istdaten, ausgerichtet. Diese Ausrichtung geschieht über die von den Kugelmittelpunkten jeweils aufgespannten Ebenen, d.h., die Ebene der Istdaten der Kugelmittelpunkte wird mit der Ebene der Solldaten der Kugelmittelpunkte in Ausrichtung gebracht und weiterhin werden in dieser Ebene dann die Abstände zwischen Soll- und Istdaten der Kugelmittelpunkte minimiert, wobei die Zentrale im Mittelpunkt des Koordinatensystems des Scanners für diese Minimierung herangezogen wird. Bei dieser zentralen Kugel stimmten die Soll- und Istdaten im Wesentlichen überein.

Anschließend werden die Abweichungen Δx_{z_i},_{s_i}, Δy_{z_i},_{s_i}, Δz_{z_i},_{s_i} zwischen Soll- und Istdaten der Kugelmittelpunkte berechnet und durch Interpolation/Extrapolation werden dreidimensionale erste Korrekturwerte aller Pixelelemente der Scannermatrix entsprechend Zeilen und Spalten ermittelt.

Es hat sich gezeigt, dass die Genauigkeit mit dem Kalibrierverfahren entsprechend den obigen Schritten noch nicht ganz befriedigend ist, so dass ein weiterer Kalibriervorgang vorgenommen wird. Dazu werden die Daten der mit dem Scanner anfangs aufgenommenen Punktwolke mit Hilfe der ersten Korrekturwerte korrigiert und es werden erneut die Istwerte der Kugelmittelpunkte aus der korrigierten Punktwolke des Scanners, wie oben beschrieben, ermittelt. Dann werden wiederum die Zeilen- und Spaltenindices der Scannermatrix für diese ermittelten Kugelmittelpunkte bestimmt und das Koordinatensystem der Solldaten zu dem Koordinatensystem der Istdaten, wie gleichfalls oben beschrieben, ausgerichtet. Dann werden die Abweichungen zwischen den Soll- und Istdaten der Kugelmittelpunkte erneut bestimmt und durch Interpolation/Extrapolation dreidimensionale zweite Korrekturwerte aller Pixelelemente der Scannermatrix ermittelt. Durch Summierung der ersten und zweiten Korrekturwerte ergeben sich Korrekturmatrizen Δx_{z,s}, Δy_{z,s}, Δz_{z,s}, die bei den folgenden Messungen jeweils für die dreidimensionale Korrektur der vom Scanner erzeugten Punktwolke herangezogen werden.

Mit Hilfe eines solchen Kalibrierverfahrens wurde die Genauigkeit des verwendeten Laserscanners bei der erforderlichen Objektentfernung von mehr als 3 m um einen Faktor von ca. 10 verbessert werden.

## Patentansprüche

1. Verfahren zur Steuerung von Robotern zum Schweißen von dreidimensionalen Werkstücken mit folgenden Schritten:
Positionieren und Heften von Profilen (3) auf eine Platte (2) zur Bildung des zu schweißenden Werkstücks (1),
Anordnen der Platte auf einem Arbeitstisch, Abbilden des Werkstücks (1) mittels eines dreidimensionalen Bilderfassungssystems in Form von dreidimensionalen Bildpunkten,
Bestimmen der Geometriedaten der Platte (2) und der Profile (3) direkt aus den dreidimensionalen Bildpunkten als Punktewolke durch Segmentierung derselben nach Umgebung und Werkstück (1), Platte (2) und Profilen (3) und Profilen (3) untereinander, durch Feststellen von Profilverläufen und Untersuchung der einzelnen Profile (3) nach ihren Eigenschaften inklusive der Zuordnung von Freischnitten und Endbeschnittformen aus den segmentierten Punktewolken, wobei die Lage der Plattenebene bestimmt und die Messpunkte des Werkstücks in ein lokales Werkstückkoordinatensystem transformiert werden, dessen x-y-Ebene mit der Ebene der Platte übereinstimmt, wobei die Bildpunkte der Plattenebene und die Bildpunkte der Profile unter Verwendung von Höhenkoordinaten getrennt werden,
Bestimmen der Schweißnahtdaten aus den Geometriedaten unter Berücksichtigung der Profilaufsetzlinien und der Berührungslinien von Profilen (3),
Zuordnen der Schweißnahtdaten zu parametrierbaren Vorgaben für den Schweißplan,
zu gespeicherten vordefinierten Bewegungsmustern des Roboters sowie zu Befehlen zur Steuerung und Regelung des Schweißprozesses.

2. Verfahren nach Anspruch 1, **dadurch gekennzeichnet, dass** das Abbild des Werkstücks (1) mittels eines 3D-Laserscanners (11) erfasst wird oder mittels einer Projektion von Mustern und mindestens einer Kamera mit zugeordneter Auswertung erfasst wird.

3. Verfahren nach Anspruch 1 oder 2, **dadurch gekennzeichnet, dass** die Bestimmung der Geometriedaten durch 3D Verarbeitung erfolgt.

4. Verfahren nach Anspruch 3, **dadurch gekennzeichnet, dass** zur Abgrenzung von Werkstück (1) und Umgebung die Konturen der Platte (2) bestimmt werden.

5. Verfahren nach Anspruch 3 oder Anspruch 4, **dadurch gekennzeichnet, dass** die Bildpunkte der Profile (3) nach zusammenhängenden Strukturen vorsortiert werden.

6. Verfahren nach Anspruch 5, **dadurch gekennzeichnet, dass** aus den Bildpunkten der zusammenhängenden Strukturen lineare Profilverläufe ermittelt werden.

7. Verfahren nach Anspruch 6, **dadurch gekennzeichnet, dass** aus den linearen Profilverläufen sowie aus der Lage der Plattenebene die Profilaufsetzlinien und die Berührungslinien von Profilen (3) bestimmt werden.

8. Verfahren nach einem der Ansprüche 1 bis 7, **dadurch gekennzeichnet, dass** das Bilderfassungssystem durch folgende Schritte kalibriert wird:
a) Anordnen von Referenzkugeln in einer Ebene mit Bezug zu dem später zu schweißenden Werkstück (1), wobei die Sollwerte der Mittelpunkte der Referenzkugeln in einem beliebigen Koordinatensystem und mindestens ein Parameter zur Steuerung des Kalibrationsverfahrens vorgegeben wird,
b) Erzeugen einer Punktwolke der Referenzkugeln mit dem Bilderfassungssystem und Ermitteln der Istwerte der Kugelmittelpunkte im den Istwerten zugeordneten Koordinatensystem,
c) Ausrichten des Koordinatensystems der Sollwerte zu dem Koordinatensystem der Istwerte, gen zwischen den Soll- und Istwerten der Kugelmittelpunkte,
e) Ermitteln von dreidimensionalen ersten Korrekturwerten für Koordinaten des Bilderfassungsbereichs durch Interpolation/Extrapolation.

9. Verfahren nach Anspruch 8, **dadurch gekennzeichnet, dass** mit Hilfe der ersten Korrekturwerte die im Schritt b) aufgenommene Punktwolke korrigiert wird und korrigierte Istwerte der Kugelmittelpunkte ermittelt werden, die Schritte c) und d) wiederholt werden und dreidimensionale zweite Korrekturwerte für die Koordinaten des Bilderfassungssystems durch Interpolation/Extrapolation bestimmt werden, wobei die Summe der ersten und zweiten Korrekturwerte zur Bestimmung von dreidimensionalen Korrekturwerten für das Bilderfassungssystem gebildet wird.

10. Verfahren nach Anspruch 8 oder Anspruch 9, wobei das Bilderfassungssystem ein Laserscanner mit einer Scannermatrix als Bilderfassungssensor ist, **dadurch gekennzeichnet, dass** zwischen den Schritten b) und c) die zu den ermittelten Kugelmittelpunkten gehörenden Zeilen- und Spaltenindices der Scannermatrix bestimmt werden und dass die dreidimensionalen ersten Korrekturwerte für alle Pixelelemente der Scannermatrix ermittelt werden.

11. Verfahren nach einem der Ansprüche 8 bis 10, **dadurch gekennzeichnet, dass** zur Ermittlung der zweiten Korrekturwerte auch der Schritt des Bestimmens der zu den korrigierten Istwerten der Kugelmittelpunkte gehörenden Spalten- und Zeilenindices der Scannermatrix wiederholt wird und dass dreidimensionale Korrekturmatrizen für den Scanner aus der Summe der ersten und zweiten Korrekturwerte gebildet werden.

12. Verfahren nach einem der Ansprüche 8 oder 11, **dadurch gekennzeichnet, dass** die Istwerte der Kugelmittelpunkte durch Aufteilen der Punktwolke in einzelne Teilpunktwolken, Bestimmen der Koordinaten der Oberflächenpunkte und Berechnen der Mittelpunkte der einzelnen Kugeln mit Hilfe der Methode der kleinsten Fehlerquadrate bestimmt werden.

13. Verfahren nach einem der Ansprüche 8 bis 10, **dadurch gekennzeichnet, dass** das Ausrichten nach Schritt d) durch Ausrichten über die von den Kugelmittelpunkten aufgespannte Ebene durchgeführt wird und in dieser Ebene eine Ausrichtung durch Minimierung der Abstände zwischen Soll- und Istwerten der Kugelmittelpunkte sowie über eine in den Mittelpunkt des Koordinatensystems der Istwerte gelegten zentralen Kugel vorgenommen wird.

14. Vorrichtung zur Steuerung von Robotern zum Schweißen von dreidimensionalen Werkstücken umfassend:
ein Bilderfassungssystem zum Erfassen eines dreidimensionalen Bildes eines zu schweißenden Werkstücks (1), das auf eine auf einem Arbeitstisch angeordnete Platte (2) geheftete Profile (3) aufweist, und zum Liefern von Bilddaten als Bildpunkte,
ein Geometrieerkennungsmodul, das ausgebildet ist zum Bestimmen der Geometriedaten der Platte (2) und der Profile (3) direkt aus den dreidimensionalen Bildpunkten als Punktewolke durch Segmentierung derselben nach Umgebung und Werkstück (1), Platte (2) und Profilen (3) und Profilen (3) untereinander, durch Feststellen von Profilverläufen und Untersuchung der einzelnen Profile (3) nach ihren Eigenschaften inklusive der Zuordnung von Freischnitten und
Endbeschnittformen aus den segmentierten Punktewolken, derart, dass die Lage der Plattenebene bestimmt und die Messpunkte des Werkstücks in ein lokales Werkstückkoordinatensystem transformiert werden, dessen x-y-Ebene mit der Ebene der Platte übereinstimmt, wobei das Geometrieerkennungsmodul dazu ausgebildet ist, die Bildpunkte der Plattenebene und die Bildpunkte der Profile unter Verwerdung von Höhenkoordinaten zu trennen und
eine einen Steuerungsalgorithmus enthaltende Steuereinrichtung zum Zuordnen der Schweißnahtdaten zu parametrierbaren Vorgaben für den Schweißplan, zu gespeicherten vordefinierten Bewegungsmuster des Roboters sowie zu Befehlen zur Steuerung / Regelung des Schweißprozesses.

15. Vorrichtung nach Anspruch 14, **dadurch gekennzeichnet, dass** das Bilderfassungssystem einen 3D-Laserscanner (11) aufweist, das aus mehreren Einzelaufnahmen ein räumliches digitales Modell des zu schweißenden Werkstücks (1) liefert.

16. Vorrichtung nach Anspruch 14 oder Anspruch 15, **dadurch gekennzeichnet, dass** ein Kalibriermodul zum Herstellen des geometrischen Zusammenhangs zwischen den Koordinatensystemen des Roboters, des Bilderfassungssystems und dem zu schweißenden Werkstück (1) vorgesehen ist.

17. Vorrichtung nach Anspruch 16, **dadurch gekennzeichnet, dass** das Kalibriermodul einen Kalibrationsalgorithmus entsprechend dem Verfahren nach einem der Ansprüche 8 bis 13 enthält.

## Claims

1. Method for controlling robots for welding three-dimensional workpieces, having the following steps:
positioning and tack-welding profiles (3) onto a plate (2) in order to form the workpiece (1) to be welded,
positioning the plate on a work table,
imaging the workpiece by means of a three-dimensional image detection system in the form of three-dimensional pixels,
determining the geometrical data of the plate and of the profiles directly from the three-dimensional pixels as a pixel cloud by segmenting it according to the background and the workpiece, plate (2) and profiles (3) and profiles (3) from each other, by establishing profile courses and examining the individual profiles according to their properties including cutouts and end cut edges from the segmented three-dimensional pixels, wherein the position of the plate plane is determined and the measuring points of the workpiece are transformed into a local workpiece coordinate system, the x-y plane of which coincides with the plane of the plate, thereby separating the pixels of the plate plane and the pixels of the profiles using height coordinates,
determining the weld seam data from the geometrical data taking into account the profile placement lines and the contact lines of profiles,
assigning the weld seam data to parameterisable specifications for the welding plan to stored predefined movement patterns of the robot and also to commands for controlling and regulating the welding process.

2. Method according to claim 1, **characterised in that** the image of the workpiece (1) is detected by means of a 3D laser scanner or by means of a projection of patterns and at least one camera with assigned evaluation.

3. Method according to claim 1 or claim 2, **characterised in that** the determination of the geometrical data is effected by 3D processing.

4. Method according to claim 3, **characterised in that** the contours of the plate are determined in order to delimit workpiece and background.

5. Method according to claim 3 or claim 4, **characterised in that** the pixels of the profiles are pre-sorted according to coherent structures.

6. Method according to claim 5, **characterised in that** linear profile courses are determined from the pixels of the coherent structures.

7. Method according to claim 6, **characterised in that** the profile placement lines and the contact lines of profiles are determined from the linear profile courses and also from the position of the plate plane.

8. Method according to one of the claims 1 to 7, **characterised in that** the image detection system is calibrated by the following steps:
a) disposing reference balls in a plane with respect to the workpiece to be welded later, the reference values of the centres of the reference balls in an arbitrary coordinate system and at least one parameter for controlling the calibration method being prescribed,
b) producing a point cloud of the reference balls with the image detection system and determining the actual values of the ball centres in the coordinate system assigned to the actual values,
c) orientating the coordinate system of the reference values to the coordinate system of the actual values,
d) calculating the three-dimensional deviations between the reference and actual values of the ball centres,
e) determining three-dimensional first correction values for coordinates of the image detection region by interpolation/extrapolation.

9. Method according to claim 8, **characterised in that** the point cloud photographed in step b) is corrected with the help of the first correction values and corrected actual values of the ball centres are determined, steps c) and d) are repeated and three-dimensional second correction values for the coordinates of the image detection system are determined by interpolation/extrapolation, the sum of the first and second correction values being formed in order to determine three-dimensional correction values for the image detection system.

10. Method according to claim 8 or claim 9, the image detection system being a laser scanner with a scanner matrix as image detection sensor, **characterised in that** line and column indices of the scanner matrix which are associated with the determined ball centres are determined between steps b) and c) and **in that** the three-dimensional first correction values are determined for all pixel elements of the scanner matrix.

11. Method according to one of the claims 8 to 10, **characterised in that** in order to determine the second correction values, also the step of determining the column and line indices of the scanner matrix which are associated with the corrected actual values of the ball centres is repeated and **in that** three-dimensional correction matrices are formed for the scanner from the sum of the first and second correction values.

12. Method according to one of the claims 8 or 11, **characterised in that** the actual values of the ball centres are determined by dividing the point cloud into individual partial point clouds, determining the coordinates of the surface points and calculating the centres of the individual balls with the help of the method of the smallest error squares.

13. Method according to one of the claims 8 to 10, **characterised in that** the orientation according to step d) is implemented by orientating via the plane spanned by the ball centres and, in this plane, an orientation is undertaken by minimising the spacings between reference and actual values of the ball centres and also via a central ball placed in the centre of the coordinate system of the actual values.

14. Device for controlling robots for welding three-dimensional workpieces, comprising
an image detection system for detecting a three-dimensional image of a workpiece to be welded which has profiles tack-welded onto a plate positioned on a work table, and for delivering image data as pixels,
a geometry recognition module configured for determining the geometrical data of the plate and of the profiles directly from the three-dimensional pixels as a pixel cloud by segmenting it according to the background and the workpiece, plate (2) and profiles (3) and profiles (3) from each other, by establishing profile courses and examining the individual profiles according to their properties including cut outs and end cut edges from the segmented three-dimensional pixels, so that the position of the plate plane is determined and the measuring points of the workpiece are transformed into a local workpiece coordinate system, the x-y plane of which coincides with the plane of the plate, thereby separating the pixels of the plate plane and the pixels of the profiles using height coordinates" and
a control device which contains a control algorithm for assigning the weld seam data to parameterisable specifications for the welding plan, to stored predefined movement patterns of the robot and also to commands for controlling/regulating the welding process.

15. Device according to claim 14, **characterised in that** the image detection system has a 3D laser scanner which delivers a spatial digital model of the workpiece to be welded from several individual photographs.

16. Method according to claim 14 or claim 15, **characterised in that** a calibration module for geometrical correlation of the coordinate systems of the robot, the image detection system and the workpiece to be welded is provided.

17. Method according to claim 16, **characterised in that** the calibration module contains a calibration algorithm corresponding to the method according to one of the claims 8 to 13.

## Revendications

1. Procédé servant à commander des robots destinés à souder des pièces tridimensionnelles, comprenant les étapes suivantes consistant à :
positionner et coller des profilés (3) sur une plaque (2) pour obtenir la pièce (1) à souder,
disposer la plaque sur un plateau de travail,
reproduire la pièce (1) au moyen d'un système d'acquisition d'images tridimensionnel sous la forme de points d'image tridimensionnels,
définir les données géométriques de la plaque (2) et des profilés (3) directement à partir des points d'image tridimensionnels sous la forme de nuages de points par segmentation de ces derniers selon l'environnement et la pièce (1), la plaque (2) et les profilés (3) et les profilés (3) entre eux, en constatant des courbes des profilés et en examinant les divers profilés (3) selon leurs caractéristiques y compris selon l'association de découpes libres et de formes de rognage définitives à partir des nuages de points segmentés, sachant que la position du plan de plaque est définie et que les points de mesure de la pièce sont transformés en un système local de coordonnées de pièce dont le plan x-y coïncide avec le plan de la plaque, sachant que les points d'image du plan de plaque et les points d'image des profilés sont séparés en utilisant des coordonnées de hauteur,
définir les données de soudure à partir des données géométriques en tenant compte des lignes à poser des profilés et des lignes de contact de profilés (3),
associer les données de soudure aux spécifications pouvant être paramétrées pour le plan de soudage, aux modèles de déplacement préalablement définis mémorisés du robot, ainsi qu'aux instructions de commande et de réglage du processus de soudage.

2. Procédé selon la revendication 1, **caractérisé en ce que** la représentation de la pièce (1) est appréhendée au moyen d'un scanner laser 3D (11) ou est appréhendée au moyen d'une projection de modèles et au moyen d'au moins une caméra, à l'aide d'une analyse associée.

3. Procédé selon la revendication 1 ou 2, **caractérisé en ce que** les données géométriques sont définies par un traitement 3D.

4. Procédé selon la revendication 3, **caractérisé en ce que** les contours de la plaque (2) sont définis pour délimiter la pièce (1) et l'environnement.

5. Procédé selon la revendication 3 ou la revendication 4, **caractérisé en ce que** les points d'image des profilés (3) sont préalablement triés selon des structures rattachées.

6. Procédé selon la revendication 5, **caractérisé en ce que** des courbes linéaires de profilés sont déterminées à partir des points d'image des structures rattachées.

7. Procédé selon la revendication 6, **caractérisé en ce que** les lignes à poser des profilés et les lignes de contact de profilés (3) sont définies à partir des courbes linéaires de profilé ainsi qu'à partir de la position du plan de plaque.

8. Procédé selon l'une quelconque des revendications 1 à 7, **caractérisé en ce que** le système d'acquisition d'images est étalonné grâce aux étapes qui suivent consistant à :
a) disposer des sphères de référence dans un plan par rapport à la pièce (1) à souder ultérieurement, sachant que les valeurs théoriques des points centraux des sphères de référence relèvent d'un système de coordonnées quelconque et qu'au moins un paramètre est prédéfini pour commander la procédure d'étalonnage,
b) produire un nuage de points des sphères de référence à l'aide du système d'acquisition d'images et déterminer les valeurs réelles des points centraux de sphère dans le système de coordonnées associé aux valeurs réelles,
c) orienter le système de coordonnées des valeurs théoriques par rapport au système de coordonnées des valeurs réelles,
d) calculer les écarts tridimensionnels entre les valeurs théoriques et les valeurs réelles des points centraux de sphère,
e) déterminer des premières valeurs de correction tridimensionnelles pour des coordonnées de la zone d'acquisition d'images par interpolation/extrapolation.

9. Procédé selon la revendication 8, **caractérisé en ce que**, à l'aide des premières valeurs de correction, le nuage de points enregistré à l'étape b) est corrigé et des valeurs réelles corrigées des points centraux de sphère sont déterminées, **en ce que** les étapes c) et d) sont répétées, et que des deuxièmes valeurs de correction tridimensionnelles pour les coordonnées du système d'acquisition d'images sont définies par interpolation/extrapolation, sachant que la somme des premières et deuxièmes valeurs de correction est obtenue pour définir des valeurs de correction tridimensionnelles pour le système d'acquisition d'images.

10. Procédé selon la revendication 8 ou la revendication 9, sachant que le système d'acquisition d'images est un scanner laser pourvu d'une matrice de scanner en tant que capteur d'acquisition d'images, **caractérisé en ce que** les indices de lignes et de colonnes relevant des points centraux de sphère déterminés, de la matrice de scanner sont définis entre les étapes b) et c), et **en ce que** les premières valeurs de correction tridimensionnelles sont déterminées pour tous les pixels de la matrice de scanner.

11. Procédé selon l'une quelconque des revendications 8 à 10, **caractérisé en ce qu'**également l'étape consistant à définir les indices de colonnes et de lignes, relevant des valeurs réelles à corriger des points centraux de sphère, de la matrice de scanner est répétée aux fins de la détermination des deuxièmes valeurs de correction, et **en ce que** des matrices de correction tridimensionnelles pour le scanner sont obtenues à partir de la somme des premières et des deuxièmes valeurs de correction.

12. Procédé selon l'une quelconque des revendications 8 ou 11, **caractérisé en ce que** les valeurs réelles des points centraux de sphère sont définies en divisant les nuages de points en divers nuages partiels de points, en définissant les coordonnées des points de surfaces et en calculant les points centraux des diverses sphères à l'aide de la méthode des moindres carrés.

13. Procédé selon l'une quelconque des revendications 8 à 10, **caractérisé en ce que** l'orientation est effectuée après l'étape d) par l'orientation au-dessus du plan formé par les points centraux de sphère, et **en ce qu'**une orientation en réduisant les écarts entre les valeurs théoriques et les valeurs réelles des points centraux de sphère ainsi que par une sphère centrale posée au centre du système de coordonnées des valeurs réelles est entreprise dans ledit plan.

14. Dispositif servant à commander des robots destinées à souder des pièces tridimensionnelles, comprenant :
un système d'acquisition d'images servant à appréhender une image tridimensionnelle d'une pièce (1) à souder, laquelle présente des profilés (3) collés sur une plaque (2) disposée sur un plateau de travail, et servant à fournir des données d'image sous la forme de points d'image,
un module d'identification de formes géométriques, qui est réalisé pour définir les données géométriques de la plaque (2) et des profilés (3) directement à partir des points d'image tridimensionnels sous la forme de nuages de points par segmentation de ces derniers selon l'environnement et la pièce (1), la plaque (2) et les profilés (3), et les profilés (3) entre eux, en constatant des courbes de profilé et en examinant les divers profilés (3) selon leurs caractéristiques y compris l'association de coupes libres et de formes de rognage terminales à partir des nuages de points segmentés, de telle manière que la position du plan de plaque est définie et que les points de mesure de la pièce sont transformés en un système local de coordonnées de pièce, dont le plan x-y coïncide avec le plan de la plaque, sachant que le module d'identification de formes géométriques est réalisé pour séparer les points d'image du plan de plaque des points d'image des profilés en utilisant des coordonnées de hauteur, et
un dispositif de commande contenant un algorithme de commande servant à associer des données de soudure à des spécifications pouvant être paramétrées pour le plan de soudage, aux modèles de déplacement mémorisés préalablement définis du robot ainsi qu'aux instructions de commande et de réglage du processus de soudage.

15. Dispositif selon la revendication 14, **caractérisé en ce que** le système d'acquisition d'images présente un scanner laser 3D (11), qui fournit à partir de plusieurs prises de vue individuelles une modélisation 3D numérique de la pièce (1) à souder.

16. Dispositif selon la revendication 14 ou 15, **caractérisé en ce qu'**un module d'étalonnage est prévu pour établir le lien géométrique entre les systèmes de coordonnées du robot, le système d'acquisition d'images et la pièce (1) à souder.

17. Dispositif selon la revendication 16, **caractérisé en ce que** le module d'étalonnage contient un algorithme d'étalonnage conformément au procédé selon l'une quelconque des revendications 8 à 13.
